(19) Europäisches Patentamt
European Patent Office
Office européen des brevets

(11) EP 0 726 467 B1

(12) **EUROPÄISCHE PATENTSCHRIFT**

(45) Veröffentlichungstag und Bekanntmachung des Hinweises auf die Patenterteilung:
**18.02.1998 Patentblatt 1998/08**

(51) Int Cl.$^6$: **G01N 37/00**

(21) Anmeldenummer: **95890178.7**

(22) Anmeldetag: **09.10.1995**

(54) **Verfahren zur Kalibrierung eines pH-Messelementes**

Method of calibration of a pH sensor

Procédé pour l'étalonnage d'un capteur de pH

(84) Benannte Vertragsstaaten:
**DE FR GB**

(30) Priorität: **01.02.1995 AT 173/95**

(43) Veröffentlichungstag der Anmeldung:
**14.08.1996 Patentblatt 1996/33**

(73) Patentinhaber: **AVL Medical Instruments AG**
**8207 Schaffhausen (CH)**

(72) Erfinder: **Leiner, Marco Jean-Pierre, Dr.**
**A-8045 Graz (AT)**

(74) Vertreter: **Krause, Walter, Dr. Dipl.-Ing. et al**
**Patentanwälte Babeluk - Krause,**
**Mariahilfer Gürtel 39/17**
**1150 Wien (AT)**

(56) Entgegenhaltungen:
**AT-B- 392 364** **DE-A- 4 317 085**

**Beschreibung**

Die Erfindung betrifft ein Verfahren zur Kalibrierung eines pH-Meßelementes, dessen ionenpermeable hydrophile Polymerschicht vor der Kalibrierung in Kontakt mit einer wäßrigen Lösung gebracht wird.

Speziell in der Blutgasanalyse ist die simultane Bestimmung der Parameter pH, $PO_2$ und $PCO_2$ von großer Bedeutung. Es wurden daher verschiedene Meßanordnungen zur kontinuierlichen (invasiven) und diskontinuierlichen Messung dieser Parameter entwickelt. Die Messung erfolgt zumeist in einem Meßvorgang unter Verwendung von drei verschiedenen, in einer Meßanordnung integrierten elektrochemischen (Ole Siggaard- Andersen, The Acid-Base Status of the Blood, Munksgaard, Copenhagen 1974, 4th edition) oder optischen Meßelementen (EP 0 354 895 A2).

Vorteilhafterweise wird das Meßelemente vor der Kalibrierung mit einem wäßrigen Medium in Kontakt gehalten.

Zur Kalibrierung der Meßelemente ist es notwendig, jedes der Elemente in einem dem Meßschritt vorgelagerten Kalibrierschritt mit zumindest einem Kalibriermedium mit bekannten Werten der zu messenden Substanz in Kontakt zu bringen.

Geeignete Kalibriermedien für optische und elektrochemische pH-Meßelemente sind Pufferflüssigkeiten, welche die zu bestimmende Meßgröße in einer bekannten und stabilen Konzentration enthalten. Zur Kalibrierung eines pH-Meßelementes ist es im allgemeinen erforderlich, das pH-Meßelement mit zumindest einer Kalibrierflüssigkeit bekannten pH-Wertes in Kontakt zu bringen. Anhand der daraus resultierenden optischen bzw. elektrischen Signale kann die Kennlinie des Meßelementes ermittelt werden.

Die Kalibrierung optischer und elektrochemischer Gasmeßelemente für $CO_2$ und $O_2$ kann gemäß EP 0 460 343 A2 z.B. mit Gasen bzw. Gasgemischen mit bekanntem $CO_2$ bzw. $O_2$ Partialdruck erfolgen. Speziell in der Blutgasanalytik vorteilhafte Kalibrierpunkte liegen bei ca. 50 - 90 und bei ca. 140-160 Torr $O_2$ für das $O_2$-Meßelement und bei 35-45 und 75-85 Torr $CO_2$ für das $CO_2$-Meßelement.

Weiters wird in der EP 0 354 895 A2 ein unter Atmosphärendruck stehendes, wasserdampfgesättigtes Gasgemisch als Kalibrier- und Lagermedium genannt, welches 60 bis 160, vorzugsweise 90 mm Hg $O_2$ und 20 bis 60, vorzugsweise 35 mm Hg $CO_2$ sowie ein Inertgas, vorzugsweise Stickstoff, enthält. Während sich ein derartiges Kalibriermedium dafür eignet optische Sensoren zur Messung des $CO_2$-Gehaltes und des $O_2$-Gehaltes zu kalibrieren, ist eine direkte Kalibrierung von pH-Sensoren damit nicht möglich da sich ein definierter pH-Wert nur in einer wäßrigen Lösung einstellt und durch ein wasserdampfgesättigtes Gasgemisch ohne weitere Vorkehrungen keine pH-Kalibrierung durchführbar ist.

$CO_2$-Meßelemente werden häufig auch mit tonometrierten Flüssigkeiten (Flüssigkeiten, welche mit Gasen bekannter Zusammensetzung äquilibriert wurden) oder mit kurz vor der Kalibrierung hergestellten Flüssigkeiten kalibriert.

Flüssige Kalibriermedien, welche zur Kalibrierung von $CO_2$- und pH-Meßelementen verwendet werden können, sind gekennzeichnet durch eine bekannte $CO_2$ Konzentration bzw. $CO_2$-Partialdruck und einen bekannten pH-Wert. Aus der AT 392 364 B ist beispielsweise ein Verfahren zur simultanen Kalibrierung von pH-und $CO_2$-Meßelementen mit flüssigen Kalibriermedien sowie zur Herstellung dieser Medien bekannt. Das Verfahren sieht zwei, in normaler atmosphärischer Umgebung lagerstabile Flüssigkeiten und eine geeignete, von der Meßkammer getrennte Vorrichtung zum Vermischen der beiden Flüssigkeiten vor.

Eine für die Nullpunkts-Kalibrierung eines $O_2$-Meßelementes geeignete $O_2$-freie Kalibrierflüssigkeit kann z.B. ein Reagens enthalten, welches den Sauerstoff durch eine chemische Reaktion verbraucht.

Flüssige Kalibriermedien, welche zur Kalibrierung von $O_2$-Meßelementen außerhalb des Nullppunktes geeignet sind, müssen auch eine definierte $O_2$-Konzentration (bzw. $O_2$-Partialdruck) aufweisen. Aufgrund der geringen $O_2$-Löslichkeit flüssiger Kalibriermedien erfordert die Bereitstellung und die Handhabung dieser Medien gegenüber der Verwendung von gasförmigen Medien aufwendige technische Maßnahmen.

Durch die Verwendung verschiedener flüssiger und gasförmiger Kalibriermedien für mehrere in einer Meßanordnung vorliegende Meßelemente entstehen hohe Kosten für die Bereitstellung der verschieden flüssigen und gasförmigen Medien. Verschiedene Medien erfordern zudem technisch aufwendige Meßanordnungen und es entstehen lange Wartezeiten durch komplexe Kalibrierverfahren. Die nachstehenden Ausführungen sollen die Probleme, die bei der Kalibrierung von optischen oder elektrochemischen pH-Meßelementen auftreten, insbesondere im Zusammenhang mit der gleichzeitigen Kalibrierung von $O_2$- und $CO_2$-Meßelementen darlegen.

Elektrochemische pH-Meßelemente sind z.B. Glaselektroden, Flüssigmembranelektroden, Antimonelektroden, Feldeffekttransistoren (ISFET). Festkörpersysteme (z. B. Edelmetall/Edelmetalloxidsysteme wie $Ir/IrO_2$ und $Pd/PdO_2$, Redoxsysteme z. B.(Chinhydronelektrode) und Polypyrrole.

Optische pH-Meßelemente enthalten zumeist pH-Indikatoren in Form organischer Säuren oder Basen, welche in einer ionenpermeablen, hydrophilen Polymerschicht (z. B. ein Hydrogel) oder direkt an einem Lichtleiter gebunden vorliegen. Als pH-Indikatoren werden Absorptions- oder Lumineszenzfarbstoffe verwendet, aber auch Polymere (z. B. Polyanilin). Diese Indikatoren werden in zumindest indirekten Kontakt mit der Probe gebracht.

In Abhängigkeit des pH-Wertes ($pH = -\log(aH^+)$) stellt sich ein thermodynamisches Gleichgewicht zwischen der protonierten Form (Säure) und der deprotonierten Form (konjugierte Base) des Indikators entsprechend der Reakti-

onsgleichung ein:

$$HA \overset{Ka}{\leftrightarrow} A^- + H^+$$

$$Ka = aH^+ \frac{aA^-}{aHA}$$

wobei HA die Säureform und A⁻ die konjugierte Basenform der Indikatorsubstanz sowie Ka die thermodynamische Gleichgewichtskonstante und a die Aktivität ist.

Die beiden chemischen Formen HA und A⁻ des Indikators sind gekennzeichnet durch unterschiedliche Kolorimetrische- und/oder Lumineszenzeigenschaften. Wird beispielsweise die Absorption bzw. Fluoreszenzintensität der konjugierten Base (A⁻) zur Bestimmung des pH-Wertes herangezogen, so ist es zur Kalibrierung eines Meßelementes mit einem derartigen Indikator erforderlich, die Absorption bzw. die Fluoreszenzintensität der Basenform (A⁻) mit zumindest einem Kalibriermedium mit bekanntem pH-Wert zu bestimmen.

Geeignete Kalibriermedien für optische und elektrochemische pH-Meßelemente sind z. B. Flüssigkeiten (Puffer), welche einen bekannten und stabilen pH-Wert aufweisen, welcher sich bei Zusatz geringer Mengen sauer oder basisch reagierender Komponenten oder bei Verdünnung nur unwesentlich verändert.

Insbesondere besitzen wäßrige Flüssigkeiten, die schwache Säuren und deren Salze im Verhältnis 1 : 1 aufweisen, besonders ausgeprägte Puffereigenschaften. Die Pufferkapazität nimmt dabei mit zunehmender Konzentration der Pufferkomponenten zu.

Beispiele zur Berechnung der pH-Werte gängiger Puffersysteme sind z. B. in Claus Bliefert, pH-Wert Berechnungen, Verlag Chemie, Weinheim 1987, angegeben. In der Blutgasanalytik werden pH-Meßelemente häufig bei den pH-Werten von ca. 7.4 und ca. 6.8 kalibriert.

Eine erste häufig verwendete Kalibrierflüssigkeit besteht beispielsweise aus einer Lösung von 0.008695 (mol/kg) $KH_2PO_4$ und 0.03043 mol/kg $Na_2HPO_4$. Bei 37°C und im Gleichgewicht mit $CO_2$-hältigen Gasen unterschiedlichen $CO_2$-Patialdruckes weist diese Kalibrierflüssigkeit A folgende pH-Werte auf:

| $PCO_2$ (Torr) | pH |
|---|---|
| 0 | 7.38 |
| 40 | 6.97 |
| 80 | 6.83 |

Eine zweite Kalibrierflüssigkeit ist beispielsweise eine wäßrige Lösung aus 0.025 mol/kg $KH_2PO_4$ und 0.025 mol/kg $Na_2HPO_4$. Bei 37°C und im Gleichgewicht mit $CO_2$-hältigen Gasen unterschiedlichen $CO_2$-Partialdruckes weist diese Kalibrier flüssigkeit B folgende pH-Werte auf:

| $PCO_2$ (Torr) | pH |
|---|---|
| 0 | 6.84 |
| 40 | 6.69 |
| 80 | 6.60 |

Zur Kalibrierung eines optischen oder elektrochemischen $CO_2$-Meßelementes für die Blutgasanalyse ist es besonders vorteilhaft, zumindet ein Kalibriermedium zu verwenden, welches vorzugsweise einen $CO_2$-Partialdruck im physiologischen Normalbereich des Blutes (35-45 Torr $CO_2$) aufweist. Ein zweites Kalibriermedium sollte vorzugsweise einen $CO_2$-Partialdruck von ca. 80 Torr aufweisen.

Aus obiger Tabelle ist ersichtlich, daß die beiden zur Kalibrierung von pH-Meßelementen häufig verwendeten Phosphatpuffer nicht zur gleichzeitigen Kalibrierung des $CO_2$-Meßelementes geeignet sind, da sich im Gleichgewicht mit 40 Torr $CO_2$ kein pH-Wert im physiologischen Normalbereich (7.35-7.45) einstellt.

Die Äquilibrierung (Tonometrie) der flüssigen Kalibriermedien mit Gasen bekannter Zusammensetzung erfordert zudem entsprechende Vorrichtungen und verbraucht relativ große Gasmengen.

Für die simultane Kalibrierung eines in der Meßanordnung befindlichen $O_2$-Meßelementes ist ein flüssiges Kalibriermedium aufgrund der geringen Sauerstofflöslichkeit wäßriger Flüssigkeiten von Nachteil.

Die Verwendung gasförmiger Kalibriermedien wäre zwar für $CO_2$-bzw. $O_2$-Meßelemente von Vorteil, scheitert jedoch am pH-Meßelement, sodaß die simultane Kalibrierung aller drei Meßelemente bisher nicht möglich war.

Aufgabe der Erfindung ist es, ein Kalibrierverfahren für ein pH-Meßelement vorzuschlagen, welches sich auch für die simultane Kalibrierung weiterer in einer Meßanordnung befindlicher Meßelemente eignet. Erfindungsgemäß soll das Verfahren sowohl auf ein einzelnes pH-Meßelement als auch auf ein pH-Meßelement in Kombination mit beliebigen anderen Gasmeßelementen (z. B. $CO_2$, $O_2$, $SO_2$, $NH_3$, $H_2S$, flüchtige organische Verbindungen) angewendet werden können.

Diese Aufgabe wird erfindungsgemäß dadurch gelöst, daß die wäßrige Lösung durch ein gasförmiges Kalibriermedium verdrängt oder ersetzt wird, wobei Reste der wäßrigen Lösung in der ionenpermeablen Polymerschicht verbleiben, daß das gasförmige Kalibriermedium zumindest eine in wäßriger Lösung sauer oder basisch reagierende Komponente in bekannter Menge enthält, welche mit den verbleibenden Resten der wäßrigen Lösung in der Polymerschicht reagieren, sodaß sich in der Polymerschicht ein definierter pH-Wert einstellt, welcher für die Kalibrierung des Meßelementes herangezogen wird.

Eine derartige ionenpermeable hydrophile Polymerschicht z.B. eine Hydrogelschicht ist bei den meisten bekannten optischen pH-Meßelementen in der Regel bereits vorhanden. Sie kann aber auch nachträglich angebracht werden.

Letzteres gilt auch für elektrochemische Meßelemente. Hier ist es allerdings erforderlich, daß die Hydrogelschicht auch das Referenzelement bedeckt.

Vorteilhafterweise wird ein driftfreies pH-Meßelement vor der eigentlichen Messung mit einer wäßrigen Lösung konditioniert. Die chemische Zusammensetzung dieser wäßrigen Lager- bzw. Konditionierlösung wird so gewählt, daß sie durch Tonometrie mit einem Gas, welches zumindest eine in wäßriger Lösung sauer oder basisch reagierende Komponente (beispielsweise $CO_2$) enthält, einen zur Kalibrierung des pH-Meßelemtnes geeigneten pH-Wert aufweist.

Ersetzt man nun während des Kalibriervorganges die Konditionier- bzw. Lagerlösung durch ein Kalibriergas mit bekannter Konzentration einer in wäßriger Lösung sauer oder basisch reagierenden Gaskomponente (z. B. $CO_2$) derart, daß Reste der Konditionierflüssigkeit in der Hydrogelschicht des Meßelementes verbleiben, so stellt die sauer oder basisch reagierende Gaskomponente einen ihrem Gaspartialdruck und der chemischen Zusammensetzung der Reste der Konditionierflüssigkeit entsprechenden pH-Wert in der Hydrogelschicht des pH-Meßelementes ein.

Die Vorteile gasförmiger Kalibriermedien gegenüber flüssigen Kalibriermedien liegen auf der Hand:

1. Geringes Volumen und Transportgewicht durch Kompression des gasförmigen Kalibriermediums in Leichtmetallgebinden.

2. Hohe Genauigkeit und leichte Herstellbarkeit der Kalibriermedien durch gravimetrische Einwaage der einzelnen gasförmigen Komponenten.

3. Keine Veränderung durch Mikroorganismen, daher Wegfall biozider Zusätze.

4. Unempfindlich gegenüber Temperaturschwankungen in normaler atmosphärischer Umgebung.

5. Keine Entsorgung nach Gebrauch bei Vorliegen ungiftiger Gaskomponenten (kein Abfall).

6. Keine Kontamination durch chemische Bestandteile des Gebindes.

7. Kein aktiver Transport in die Meßvorrichtung.

8. Kein Gefahrenpotential bei Vorliegen eines Lecks (bei Vorliegen ungiftiger gasförmiger Komponenten)

Erfindungsgemäß wird weiters vorgeschlagen, daß die wäßrige Lösung stabile, schwach sauer oder basisch reagierende organische oder anorganische Verbindungen als Pufferkomponenten aufweist, welche durch Reaktion mit den sauer oder basisch reagierenden Komponenten des gasförmigen Kalibriermediums einen vorbestimmten pH-Wert in der hydrophilen Polymerschicht ergeben.

Geeignete Pufferkomponenten der Lager- bzw. Konditionierflüssigkeit sind solche, die in wäßriger Lösung und im thermodynamischen Gleichgewicht mit einer in wäßriger Lösung sauer oder basisch reagierenden gasförmigen Komponente eines Kalibriergases bekannter Zusammensetzung, bekannte pH-Werte ergeben. Die Art und die Konzentration der Pufferkomponenten hängt vom zu realisierenden pH-Wert und der Art des Gas-Meßelementes für die in wäßriger Lösung sauer oder basisch reagierende Gaskomponente ab.

Vorzugsweise werden als Pufferkomponenten in wäßriger Umgebung sauer oder basisch reagierende anorganische und organische Verbindungen sowie deren Salze verwendet, beispielsweise Carbonate, Phosphate, Phtalate, Borate, Tartrate, Citrate, Amine, Bis(2-hydroxy-aethyl)amino-tris(hydroxymethyl)-methan (BIS-TRIS), Tris(hy-droxymethyl)-aminomethan (TRIS), N-Tris(hydroxymethyl)-methyl-2-aminoaethansulfonsäure (TES), 4-(2-Hydroxyaethyl)-piperazin-1-aethansulfonsäure (HEPES), 3-Morpholinopropansulfonsäure (MOPS).

Da insbesonders die mit optischen pH-Meßelementen gemessenen pH-Werte stark von der Ionenstärke der Probe abhängen, ist es von besonderem Vorteil, wenn der wäßrigen Lösung zur Anpassung deren Ionenstärke an jene der zu vermessenden Probe Neutralsalze, vorzugsweise NaCl, KCl oder LiCl zugemischt werden.

Bei gleichzeitiger Kalibrierung zumindest eines Gaselementes mit dem für das pH-Meßelement vorgesehenen Kalibriergas wird vorgeschlagen, daß das gasförmige Kalibriermedium die dem jeweiligen Gasmeßelement entsprechende Gaskomponente in einer Konzentration enthält, welche dem Normalbereich des Gaspartialdruckes in der jeweiligen Meßsituation entspricht.

Erfindungsgemäß kann die in wäßriger Lösung sauer reagierende gasförmige Komponente $CO_2$ des gasförmgien Kalibriermediums zur gleichzeitigen Kalibrierung eines allfälligen, in der Meßanordnung befindlichen $CO_2$-Meßelementes verwendet werden.

Zur simultanen Kalibrierung eines allfälligen, in der Meßanordnung befindlichen $O_2$-Meßelementes ist es erforderlich, daß das gasförmige Kalibriermedium, zusätzlich $O_2$ in bekannter Konzentration aufweist.

Zur simultanen Kalibrierung aller drei Meßelemente (pH, $CO_2$ und $O_2$) sind beispielsweise Kalibriergase folgender Zusammen setzung geeignet:

| Kalibriergas 1 | 5.5 Vol%$CO_2$ | 12.5Vol%$O_2$ | Rest Inertgas ($N_2$) |
|---|---|---|---|
| Kalibriergas 2 | 11.0 Vol%$CO_2$ | 20.1Vol%$O_2$ | Rest Inertgas ($N_2$) |

Nach der Befeuchtung, beispielsweise durch Kontakt mit der an der Wandung des Probenkanals der Meßanordnung verbleibenden Lager- bzw. Konditionierlösung bei 37°C, und einem Gesamtgasdruck von 720 Torr weisen diese Kalibriergase die folgenden Gaspartialdrücke auf:

| Kalibriergas 1 | 37 Torr $CO_2$ | 84 Torr $O_2$ |
|---|---|---|
| Kalibriegase 2 | 75 Torr $CO_2$ | 135 Torr $O_2$ |

Werden der Lager- bzw. Konditionierlösung $HCO_3^-$ in einer Konzentration von 18 mmol/l zugesetzt, so stellen sich in der Hydrogelschicht des pH-Meßelementes in Kontakt mit den obigen Kalibriergasen die folgende pH-Werte ein:

| Kalibriergas 1 | pH = 7.43 |
|---|---|
| Kalibriergas 2 | pH = 7.13 |

Zur Erhöhung der Benetzbarkeit der mit der Probe in Kontakt kommenden Teile der Meßvorrichtung ist es von besonderem Vorteil, wenn der wäßrigen Lösung ionische oder nichtionische Detergentien, beispielsweise Triton-X-100 (Du Pont Company, Boston, MA 02118, USA), Dehydran 241 oder Dehydrol 100 (Henkel Corporation, Ambier, PA 19002, USA), zugesetzt werden.

Häufig bewirkt Wachstum von Bakterien oder Pilzen eine Veränderung der Zusammensetzung, insbesondere der Pufferkomponenten einer wäßrigen Lagerlösung. Infolge dieser biologischen Aktivitäten ist der pH-Wert beim Kalibriervorgang dann nicht mehr hinreichend genau bekannt. Daher hat es sich als vorteilhaft erwiesen, wenn der wäßrigen Lösung Biozide, beispielsweise $NaN_3$, Mergal K9N (Hoechst Austria AG, A-1121 Vienna), Proclin 300 (Supelco, Inc. Supelco Park, Bellefonte, PA 16823, USA), Bronidox L (Henkel Corporation, Hoboken, NJ 07030, USA) oder Nuosept C (Huls America, Inc., Priscataway NJ 08855, USA) zugesetzt werden.

Im folgenden wird die Erfindung anhand der Fig. 1 bis 6, welche schematische Schnittzeichnungen von Meßanordnungen zur Durchführung des erfindungsgemäßen Verfahrens zeigen, näher erläutert.

Fig. 1          zeigt eine Meßanordnung mit 3 Meßelementen in Kontakt mit einer wäßrigen Lösung, z.B. einer Lagerlösung,

Fig. 2          einen Schnitt entlang der Linie II-II in Fig. 1, die

Fig. 3 bzw. 4   zeigen das Meßelement gemäß Fig. 1 bzw. 2 in Kontakt mit dem Kalibriermedium,

Fig. 5 und 6    eine weitere Ausführungsvariante, sowie

Fig. 7          ein Diagramm über die Abhängigkeit des pH-Wertes vom $CO_2$-Partialdruck für mehrere wäßrige Lösungen.

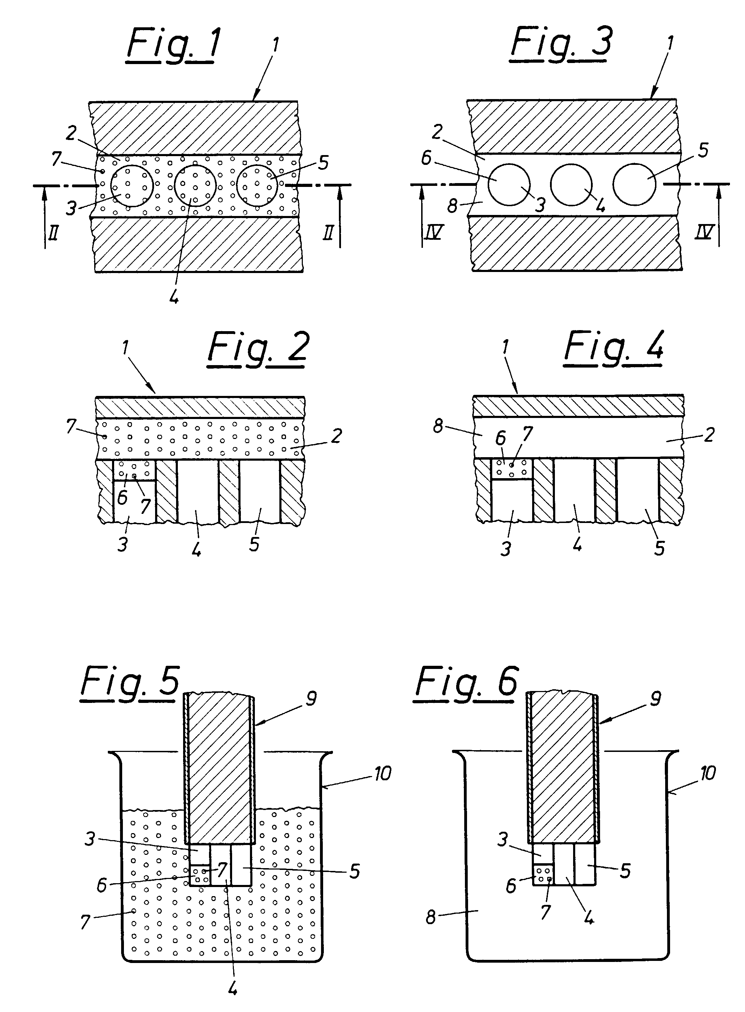

Wie aus den Fig. 1 bis 4 ersichtlich, sind in einer Meßanordnung 1 zumindest ein Kanal 2 und ein pH-Meßelement 3 angeordnet. Die Meßanordnung kann beliebig viele Gasmeßelemente 4, 5 enthalten. Eine ionenpermeable Schicht 6 des pH-Meßelementes 3 steht in direktem Kontakt mit einer wäßrigen Lösung, z.B. einer Lagerlösung 7, welche sich im Kanal 2 der Meßanordnung befindet. Durch Kontakt mit der Lagerlösung dringt diese samt chemischer Komponenten in die Hydrogelschicht des pH-Meßelementes ein. Zur Kalibrierung wird die Konditionierflüssigkeit gemäß Fig. 3 und 4 durch ein Kalibriergas 8 ersetzt. Hierbei verbleiben Reste der Lagerlösung 7 in der ionenpermeablen Schicht 6 des pH-Meßelementes. Zumindest eine in wäßriger Lösung sauer oder basisch reagierende Komponente des Kalibriergases stellt über eine chemische Reaktion mit den Resten der Lagerlösung in der ionenpermeablen Schicht 6 des pH-Meßelementes 3 einen pH-Wert ein, welcher zur Kalibrierung des pH-Meßelementes herangezogen wird. Bei Vorliegen ein oder mehrerer Gasmeßelemente werden die Gaspartialdrücke geeigneter, im gasförmigen Kalibriermedium vorhandener Gaskomponenten zur Kalibrierung des bzw. der Gasmeßelemente herangezogen.

Wie aus den Fig. 5 und 6 ersichtlich ist, kann ein einzelnes pH-Meßelement 3 bzw. ein pH-Meßelement 3 in räumlich enger Anordnung mit beliebig vielen Gasmeßelementen 4, 5 an der Spitze eines Lichtleiters 9 in eine wäßrige Lager- oder Konditionierlösung 7 eingetaucht werden, welche sich in einem geeigneten Gefäß 10 befindet. Zur Kalibrierung wird die Lagerlösung 7 durch ein Kalibriergas 8 ersetzt (siehe Fig. 6) oder der Lichtleiter 9 in ein zweites Gefäß eingeführt, welches das Kalibriergas enthält.

Es sind optische Meßelemente bekannt, welche zur simultanen Messung von pH und zumindest einer gasförmigen Komponente verwendet werden können (siehe O.S. WOLFBEIS "Fiber Optic Chemical Sensors and Biosensors", Vol. 2, CRC Press, Boca Raton, 1991). Das beschriebene erfindungsgemäße Verfahren ist zur Kalibrierung derartiger Meßelemente besonders vorteilhaft.

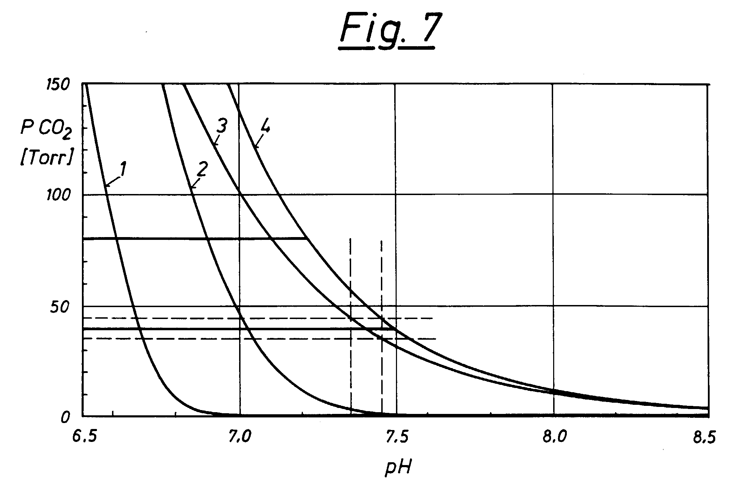

Die Kurve 1 in Fig. 7 zeigt die pH-Werte einer häufig verwendeten Kalibrierflüssigkeit (0,025 mol/l $KH_2PO_4$ und $Na_2HPO_4$) bei 37°C im Gleichgewicht mit $CO_2$-hältigen Gasen unterschiedlichen $CO_2$-Patrialdruckes. Die Kurve 2 zeigt die pH-Werte einer weiteren bekannten Kalibrierflüssigkeit (0,0087 mol/l $KH_2PO_4$ und 0,0304 mol/l $Na_2HPO_4$) bei 37°C im Gleichgewicht mit $CO_2$-hältigen Gasen unterschiedlichen $CO_2$-Partialdruckes.

Anhand der Kurven 1 und 2 ist ersichtlich, daß zur simultanen Kalibrierung eines pH- und $CO_2$-Meßelementes im physiologischen Normalbereich des Blutes (pH 7,35 - 7,45, $PCO_2$ 35 - 45 Torr), häufig verwendeter Phosphatpuffer (pH 7,38) nicht zur simultanen Kalibrierung eines $CO_2$-Meßelementes geeignet sind, da sich im Gleichgewicht mit 40 Torr $CO_2$ kein pH-Wert im physiologischen Normalbereich (7,35 - 7,45 einstellt.

Die Kurve 3 zeigt das Einstellverhalten gemäß vorliegender Erfindung unter Verwendung einer Kontaktflüssigkeit, welche 0,018 mol/l $NaHCO_2$ enthält. Bei 37°C und im Gleichgewicht mit 40 Torr $CO_2$ hat die Flüssigkeit einen pH-Wert von 7,39. Anhand der Kurve ist auch ersichtlich, daß diese Flüssigkeit zur Realisierung eines häufig benötigten zweiten Kalibrierpunktes geeignet ist. So stellt sich bei 37°C und im Gleichgewicht mit 80 Torr $CO_2$ ein pH-Wert von 7,09 ein.

Die Kurve 4 zeigt das Einstellverhalten bei Verwendung einer weiteren Kontaktflüssigkeit bestehend aus unterschiedlichen Pufferkomponenten sowie einem Neutralsalz zur Einstellung der Ionenstärke. (Zusammensetzung: 0,022 mol/l $HCO_3^-$, 0,013 mol/l $HPO_4^-$, 0,1 mol/l NaCl). Der Vorteil besteht darin, daß durch die Verwendung mehrerer unterschiedlicher Pufferkomponenten eine Feinabstimmung der pH-Werte der Flüssigkeit in Abhängigkeit des $CO_2$ Partialdruckes möglich ist.

**Patentansprüche**

1. Verfahren zur Kalibrierung eines pH-Meßelementes, dessen ionenpermeable hydrophile Polymerschicht vor der Kalibrierung in Kontakt mit einer wäßrigen Lösung gebracht wird, **dadurch gekennzeichnet**, daß die wäßrige Lösung durch ein gasförmiges Kalibriermedium verdrängt oder ersetzt wird, wobei Reste der wäßrigen Lösung in der ionenpermeablen Polymerschicht verbleiben, daß das gasförmige Kalibriermedium zumindest eine in wäßriger Lösung sauer oder basisch reagierende Komponente in bekannter Menge enthält, welche mit den verbleibenden Resten der wäßrigen Lösung in der Polymerschicht reagieren, sodaß sich in der Polymerschicht ein definierter pH-Wert einstellt, welcher für die Kalibrierung des Meßelementes herangezogen wird.

2. Verfahren nach Anspruch 1, **dadurch gekennzeichnet**, daß die wäßrige Lösung stabile, schwach sauer oder basisch reagierende organische oder anorganische Verbindungen als Pufferkomponenten aufweist, welche durch Reaktion mit den sauer oder basisch reagierenden Komponenten des gasförmigen Kalibriermediums einen vorbestimmten pH-Wert in der hydrophilen Polymerschicht ergeben.

3. Verfahren nach Anspruch 2, **dadurch gekennzeichnet**, daß als Pufferkomponenten in wäßriger Umgebung sauer oder basisch reagierende anorganische und organische Verbindungen sowie deren Salze, beispielsweise Carbonate, Phosphate, Phtalate, Borate, Tartrate, Citrate, Amine, Bis(2-hydroxyaethyl)aminotris (hydroxymethyl)-methan (BIS-TRIS), Tris(hydroxymethyl) aminomethan (TRIS), N-Tris(hydroxymethyl)methyl-2-aminoaethansulfonsäure (TES), 4-(2-Hydroxyaethyl)pipe-razin-1-aethansulfonsäure (HEPES), 3-Morpholinopropansulfonsäure (MOPS) eingesetzt werden.

**4.** Verfahren nach einem der Ansprüche 1 bis 3, **dadurch gekennzeichnet**, daß der wäßrigen Lösung zur Anpassung deren Ionenstärke an jene der zu vermessenden Probe Neutralsalze, vorzugsweise NaCl, KCl oder LiCl zugemischt werden.

**5.** Verfahren nach einem der Ansprüche 1 bis 4, wobei mit dem für das pH-Meßelement verwendeten gasförmigen Kalibriermedium gleichzeitig zumindest ein Gasmeßelement zur Bestimmung von $CO_2$, $O_2$, $SO_2$, $NH_3$ oder $H_2S$ kalibriert wird, **dadurch gekennzeichnet**, daß das gasförmige Kalibriermedium die dem jeweiligen Gasmeßelement entsprechende Gaskomponente in einer Konzentration enthält, welche dem Normalbereich des Gaspartialdruckes in der jeweiligen Meßsituation entspricht.

**6.** Verfahren nach Anspruch 5, **dadurch gekennzeichnet**, daß bei Vorhandensein eines $CO_2$-Meßelementes ein bestimmter $CO_2$-Partialdruck im gasförmigen Kalibriermedium sowohl als Gaskomponente für das $CO_2$-Meßelement als auch als sauer reagierende Komponente zur Kalibrierung des pH-Meßelementes verwendet wird.

**7.** Verfahren nach Anspruch 5 oder 6, **dadurch gekennzeichnet**, daß bei Verwendung eines $O_2$-Meßelementes $O_2$ als zusätzliche gasförmige Komponente verwendet wird.

**8.** Verfahren nach einem der Ansprüche 1 bis 7, **dadurch gekennzeichnet**, daß der wäßrigen Lösung ionische oder nichtionische Detergentien, beispielsweise Triton-X-100, Dehydran 241 oder Dehydrol 100 zugesetzt werden.

**9.** Verfahren nach einem der Ansprüche 1 bis 8, **dadurch gekennzeichnet**, daß der wäßrigen Lösung Biozide, beispielsweise $NaN_3$, Mergal K9N, Proclin 300, Bronidox L oder Nuosept C zugesetzt werden.


## Claims

**1.** A method for calibration of a pH measuring element whose ion-permeable, hydrophilic polymer layer is brought into contact with an aqueous solution prior to calibration, <u>**wherein**</u> the aqueous solution is displaced or replaced by a gaseous calibrating medium, residues of the aqueous solution remaining in the ion-permeable polymer layer, and wherein the gaseous calibrating medium contains a known amount of at least one component which is acid or basic in aqueous solution and which reacts with the remaining residues of the aqueous solution in the polymer layer, such that a defined pH value is established in the polymer layer, which is employed for calibration of the measuring element.

**2.** A method according to claim 1, **wherein** the aqueous solution contains stable organic or inorganic compounds with weak acid or basic reaction as buffer components, which will lead to a predefined pH value in the hydrophilic polymer layer by reacting with the acid or basic components of the gaseous calibrating medium.

**3.** A method according to claim 2, **wherein** preferred buffer components are inorganic and organic compounds reacting acid or basic in aqueous environment, as well as their salts, such as carbonates, phosphates, phthalates, borates, tartrates, citrates, amines, bis(2-hydroxyethyl)amino-tris (hydroxymethyl)-methane (BIS-TRIS), tris(hydroxymethyl)amino- methane (TRIS), N-tris (hydroxymethyl)-methyl-2-aminoethane sulfonic acid (TES), 4-(2-hydroxyethyl)-piperazine-1-ethane sulfonic acid (HEPES), 3-morpholinopropane sulfonic acid (MOPS).

**4.** A method according to any of claims 1 to 3, **wherein** neutral salts, preferably NaCl, KCl, or LiCl, are added to the aqueous solution in order to match the ionic strength of the solution with that of the sample to be measured.

**5.** A method according to any of claims 1 to 4, where the gaseous calibrating medium used for the pH measuring element is employed for simultaneosuly calibrating at least one gas measuring element for $CO_2$, $O_2$, $SO_2$, $NH_3$, or $H_2S$ determination, **wherein** the gaseous calibrating medium contains the respective gas component of the particular gas measuring element at a concentration corresponding to the normal range of the gas partial pressure prevailing in the particular test arrangement.

**6.** A method according to claim 5, wherein in the instance of a $CO_2$ measuring element being provided, a given $CO_2$ partial pressure in the gaseous calibrating medium is used both as gas component for the $CO_2$ measuring element

and as acid reacting component for calibration of the pH measuring element.

7. A method according to claim 5 or 6, **wherein** in the instance of an $O_2$ measuring element being provided, $O_2$ is used as additional gaseous component.

8. A method according to any of claims 1 to 7, wherein ionic or nonionic detergents, such as Triton-X-100, Dehydran 241 or Dehydrol 100, are added to the aqueous solution.

9. A method according to any of claims 1 to 8, wherein biocides are added to the aqueous solution, for example, $NaN_3$, Mergal K9N, Proclin 300, Bronidox L, or Nuosept C.


**Revendications**

1. Méthode d'étalonnage d'un élément de mesure du pH, dont la couche en polymère hydrophile perméable aux ions est mise en contact avec une solution aqueuse avant l'étalonnage, **caractérisée en ce que** la solution aqueuse est remplacée ou substituée par un milieu d'étalonnage gazeux, alors que des restes de la solution aqueuse demeurent dans la couche en polymère perméable aux ions, en ce que le milieu d'étalonnage gazeux contient une quantité connue d'au moins un composé produisant dans la solution aqueuse une réaction acide ou basique, lequel composé va réagir avec les restes de la solution aqueuse dans la couche en polymère, de sorte qu'il s'établit une valeur définie du pH dans la couche en polymère, qui va permettre l'étalonnage de l'élément de mesure.

2. Méthode selon la revendication 1, **caractérisée en ce que** la solution aqueuse contient des composés organiques ou minéraux stables présentant une réaction faiblement acide ou basique et servant de composés tampon, lesquels composés, par réaction avec les composés présentant une réaction acide ou basique du milieu d'étalonnage gazeux produisent un pH d'une valeur déterminée dans la couche en polymère hydrophile.

3. Méthode selon la revendication 2, **caractérisée en ce qu'**on utilise en tant que composés tampon, des composés organiques ou minéraux présentant une réaction acide ou basique dans un environnement aqueux, ainsi que leurs sels, ces composés étant choisis, par exemple, parmi : carbonate, phosphate, phtalate, borate, tartrate, citrate, amine, bis(2-hydroxyéthyl)aminotris(hydroxyméthyl)méthane (BIS-TRIS), tris(hydroxyméthyl)aminométhane (TRIS), acide N-tris(hydroxyméthyl)méthyl-2-aminoéthanesulfonique (TES), acide 4-(2-hydroxyéthyl)pipérazin-1-éthanesulfonique (HEPES), acide 3-morpholinopropanesulfonique (MOPS).

4. Méthode selon l'une des revendications 1 à 3 **caractérisée en ce qu'**on mélange à la solution aqueuse des sels neutres, de préférence NaCl, KCl ou LiCl, pour ajuster sa force ionique à celle de l'échantillon à mesurer considéré.

5. Méthode selon l'une des revendications 1 à 4, où le milieu d'étalonnage gazeux utilisé pour l'élément de mesure du pH sert en même temps à étalonner au moins un élément de mesure de $CO_2$, $O_2$, $SO_2$, $NH_3$ ou $H_2S$, caractérisée en ce que le milieu d'étalonnage gazeux contient le composant gazeux correspondant à l'élément de mesure du gaz considéré en une concentration qui correspond au domaine normal des pressions partielles de gaz rencontrées dans les situations de mesure considérées.

6. Méthode selon la revendication 5, **caractérisée en ce qu'**en présence d'un élément de mesure du $CO_2$, on utilise du $CO_2$ sous une pression partielle déterminée dans le milieu d'étalonnage gazeux, aussi bien comme composant gazeux pour l'élément de mesure du $CO_2$ que comme composant à réaction acide pour l'étalonnage de l'élément de mesure du pH.

7. Méthode selon la revendication 5 ou la revendication 6, **caractérisée en ce qu'**on fait appel à $O_2$ en tant que composé gazeux additionnel lorsqu'on utilise un élément de mesure de $O_2$.

8. Méthode selon l'une des revendications 1 à 7, **caractérisée en ce qu'**on ajoute à la solution aqueuse des tensioactifs ioniques ou non ioniques, comme par exemple Triton-X-100, Dehydran 241 ou Dehydrol 100.

9. Méthode selon l'une des revendications 1 à 8, **caractérisée en ce qu'**on ajoute à la solution aqueuse un biocide, par exemple $NaN_3$, Mergal K9N, Proclin 300, Bronidox L ou Nuosept C.

EP 0 726 467 B1

Fig. 1

Fig. 3

Fig. 2

Fig. 4

Fig. 5

Fig. 6

9

Fig. 7